# EUROPÄISCHE PATENTANMELDUNG

(11) **EP 0 844 690 A2**
(43) Veröffentlichungstag der Anmeldung: **27.05.1998**
(21) Anmeldenummer: 97120377.3
(22) Anmeldetag: 20.11.1997
(51) Int. Cl.: H01R 9/05

(54) **Kabelklemme, insbesondere für geschirmte Kabel**

(30) Priorität: 22.11.1996 DE 29620413 U
(71) Anmelder: SIEMENS AKTIENGESELLSCHAFT, 80333 München (DE)
(72) Erfinder: Balzer, Kurt, 76767 Hagenbach (DE)

(57) **Zusammenfassung**

Die Erfindung betrifft eine Kabelklemme, insbesondere für geschirmte Kabel, mit einem im wesentlichen U-förmigen Basisteil (1, 2, 3) zur Aufnahme zumindest eines Kabels zwischen den Schenkeln (2, 3) des Basisteils. Die Schenkelenden bilden einen Verschluß zur Lagesicherung des Kabels, der zum Einlegen oder zur Entnahme geöffnet werden kann. Vorzugsweise sind zwei voneinander unabhängig wirkende Federn vorgesehen, die in den Innenraum zwischen den Schenkeln (2, 3) zum Kontaktieren eines oder zweier eingelegter Kabel hineinragen. Die Kabelklemme ist besonders preisgünstig einteilig als Blechbiegeteil ausgeführt.

Die Erfindung wird angewandt bei speicherprogrammierbaren Steuerungen.

## Beschreibung

Die Erfindung betrifft eine Kabelklemme, insbesondere für geschirmte Kabel, nach dem Oberbegriff des Anspruchs 1, die bei Analogleitungen elektronischer Geräte zur Auflage des Schirmgeflechts auf die Gerätemasse geeignet ist.

Aus der DE-PS 30 14 697 ist eine Kabelklemme bekannt, die zwei U-förmige Bügel enthält, die jeweils mit ihrem Jochteil an je einem Ende einer Blattfeder befestigt sind. In der Blattfeder ist eine Druckschraube geführt, die auf ein Klemmstück wirkt, das zwischen den Schenkein der beiden Bügel beweglich gelagert ist. Die Kabelklemme wird mit an den Schenkelenden der Bügel befindlichen Rastnasen auf einem Widerlager befestigt. Infolge der federnden Lagerung der auf das Klemmstück wirkenden Schraube wird ein gleichmäßiger Anpreßdruck und damit eine sichere Abfangung des Kabels, das im montierten Zustand zwischen den Schenkeln der beiden Bügel liegt, für beide Zugrichtungen sowie eine ausreichende Schirmkontaktierung auch über längere Zeiträume gewährleistet. Eine gute Schirmkontaktierung ist erforderlich, um in elektronischen Geräten, in welche geschirmte Kabel geführt sind, auf die Kabelschirme eingekoppelte Störungen abzuleiten. Nachteilig bei der bekannten Kabelklemme ist, daß immer ein Widerlager benötigt wird, in das die Kabelklemme zum Abschluß der offenen Seite der beiden U-förmigen Bügel eingerastet werden muß. Zudem ist die Herstellung der Kabelklemme relativ aufwendig.

Der Erfindung liegt die Aufgabe zugrunde, eine Kabelklemme Zu schaffen, die kostengünstig herstellbar und einfach zu montieren ist, dennoch über eine lange Zeit eine gute mechanische Halterung mit einer sicheren elektrischen Kontaktierung bei geschirmten Kabeln ermöglicht.

Zur Lösung dieser Aufgabe weist die neue Kabelklemme der eingangs genannten Art die im kennzeichnenden Teil des Anspruchs 1 angegebenen Merkmale auf. In den Unteransprüchen sind vorteilhafte Weiterbildungen der Erfindung beschrieben.

Die Erfindung hat den Vorteil, daß die Kabelklemme wenig Platz benötigt und preisgünstig herstellbar ist. Durch die Verwendung einer Feder zum Andrücken eines eingelegten Kabels an eine Innenwand wird ein Fließen von Kabeln mit Kunststoffisolierung bei Temperaturbelastung ausgeglichen. Eine langfristig sichere elektrische Verbindung zwischen der Kabelklemme und dem Kabelschirm ist somit gewährleistet. Kabel unterschiedlicher Durchmesser können kontaktiert werden. Wenn in der Kabelklemme zwei unabhängig voneinander wirkende Federn vorgesehen sind, können mehrere Kabel gleichzeitig in ein und dieselbe Kabelklemme eingelegt werden. Eine besonders preisgünstige Herstellung der Kabelklemme ist gegeben, wenn sie als einteiliges Blechbiegeteil ausgeführt ist.

Anhand der Figuren, in denen ein Ausführungsbeispiel dargestellt ist, werden im folgenden die Erfindung sowie Ausgestaltungen und Vorteile näher erläutert.

Es zeigen:
- Figur 1: eine Kabelklemme in perspektivischer Ansicht,
- Figur 2: eine Kabelklemme in Seitenansicht,
- Figur 3: eine Kabelklemme mit zwei eingelegten Kabeln,
- Figur 4: eine Kabelklemme mit einem eingelegten Kabel und

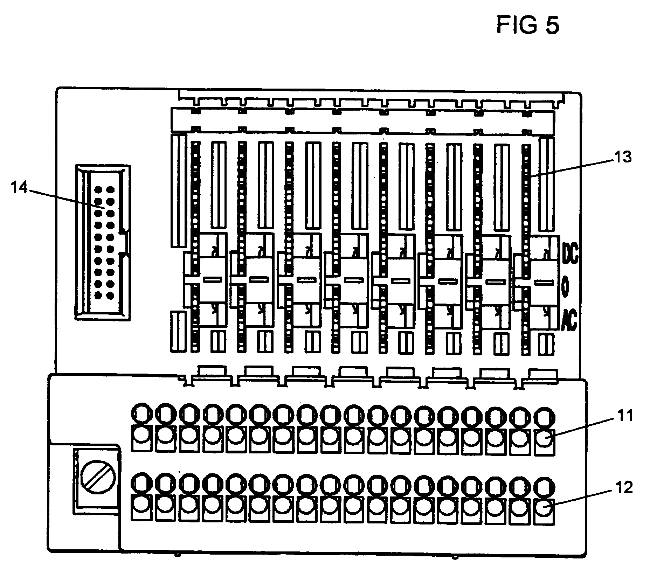

- Figur 5: ein Klemmodul, für das die Kabelklemme besonders gut geeignet ist.

In den Zeichnungen werden für gleiche Teile gleiche Bezugszeichen verwendet.

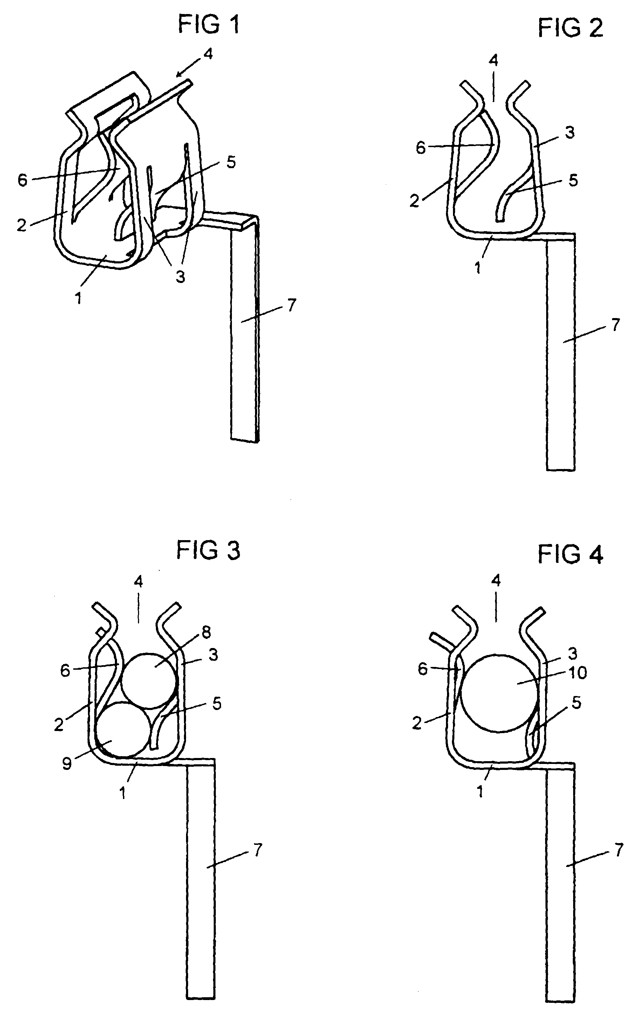

Gemäß Figur 1 besteht eine Kabelklemme, die auch als Erdschelle bezeichnet werden kann, im wesentlichen aus einem U-förmigen Basisteil mit einem Joch 1 und zwei Schenkeln 2 und 3. An ihren Enden bilden die beiden Schenkel 2 und 3 eine Verengung 4, die wie ein Verschluß wirkt, der zum Einlegen oder zur Entnahme eines Kabels durch Auseinanderbiegen der Schenkel 2 und 3 geöffnet werden kann. Durch entsprechende Formgebung bilden die Schenkelenden einen Trichter zum leichteren Einlegen und einen Trichter zur leichteren Entnahme des Kabels. Durch Drücken eines Kabels gegen diese Trichter wird die Verengung 4 erweitert und somit der Verschluß geöffnet. Ein zwischen den Schenkeln 2 und 3 liegendes Kabel wird durch den Verschluß gegen Herausfallen aus der Kabelklemme gesichert. Weiterhin ist die Kabelklemme mit zwei Federn 5 und 6 versehen, die in den Innenraum zwischen den Schenkeln 2 und 3 hineinragen und ein eingelegtes Kabel an die Innenwand des Schenkels 2 bzw. 3 oder an die jeweils andere Feder 6 bzw. 5 andrücken und damit kontaktieren. Zum Anschluß der Kabelklemme an die Masse eines Geräts ist eine vom Basisteil wegführende Blechlasche 7 vorgesehen, die in eine Federzug- oder Schraubklemme eingelegt werden kann.

In der Seitenansicht nach Figur 2 ist die Lage der Federn 5 und 6 zwischen den Schenkeln 2 und 3 gut sichtbar. Die eine Feder 6 ist an dem dem Joch 1 benachbarten Fuß des einen Schenkels 2 befestigt und verläuft von diesem zunächst in Richtung zum diametral gegenüberliegenden Ende des anderen Schenkels 3. Im Bereich der Schenkelenden ist die Feder 6 wieder zum einen Schenkel 2 hin gebogen, so daß sie eine Verlängerung des Trichters zum leichteren Einlegen eines Kabels bildet. Ein durch den Verschluß eingelegtes Kabel wird somit zunächst zwischen der Feder 6 und der Innenseite des anderen Schenkels 3 geführt. Die andere Feder 5 ist im Bereich des Endes des anderen Schenkels 3 befestigt und verläuft zum diametral gegenüberliegenden Fuß des einen Schenkels 2 hin. Ein Kabel, das auf dem Joch 1 zu liegen kommt, wird durch die Feder 5 gegen die Innenwand des Schenkels 2 gedrückt und kontaktiert.

Figur 3 veranschaulicht, wie die beiden Federn 5 und 6 bei zwei in die Kabelklemme eingelegten Leitungen 8 und 9 unabhängig voneinander wirken. Durch die Feder 5 wird die Leitung 9 gegen die Innenwand des Schenkels 2 gedrückt, während durch die Feder 6 die Leitung 8 auf der Innenwand des Schenkels 3 gehalten wird. Die Leitungen 8 und 9 können auch unterschiedliche Durchmesser aufweisen, da die Federn 5 und 6 auf diese unabhängig voneinander eine Andruckkraft ausüben. Bei entsprechender Dimensionierung der Kabelklemme können Leitungen mit einem Querschnitt zwischen 3 und 7 mm kontaktiert werden.

Wird entsprechend Figur 4 nur ein Kabel 10 größeren Durchmessers in die Kabelklemme eingelegt, so kann diese zwischen den beiden Federn 5 und 6 oder zwischen einer der Federn 5 oder 6 und der jeweils gegenüberliegenden Innenwand gehalten werden. In jedem Fall ist eine sichere Kontaktierung des Kabelschirms gewährleistet.

Besonders vorteilhaft ist die Kabelklemme zur Auflage des Schirms bei Analogleitungen an einem elektronischen Gerät einsetzbar, wie es in Figur 1 dargestellt ist. Es handelt sich hierbei um eine Einrichtung zum Anschluß peripherer Leitungen an ein Automatisierungsgerät. Die peripheren Leitungen, die beispielsweise zu Sensoren oder Aktoren an einem zu regelnden Prozeß führen, werden im unteren Teil des elektronischen Geräts beispielsweise an Klemmen 11 oder 12 angeschlossen. Im oberen Teil des Geräts sind Steckplätze 13 für Umsetzmodule, die eine Signalvorverarbeitung durchführen, die je nach Typ der peripheren Leitung unterschiedlich sein kann. Die Datenübertragung zum Automatisierungsgerat schließlich erfolgt über eine digitale Schnittstelle 14, in welcher je Kanal ein digitales Signal vorgesehen ist. Mit der Kabelklemme können nun Analogleitungen direkt am elektronischen Gerät mit Masse kontaktiert werden. Die Kabelklemme wird hierzu mit der Lasche 7 (Figur 1) beispielsweise in der Klemme 12 elektrisch angeschlossen und befestigt. Sie ist nun durch die Federzug- oder Schraubklemme 12 über die Leiterplatte des elektronischen Geräts mit dem Masseanschluß des Systems verbunden. Eine Analogleitung wird von unten herangeführt, mit abisoliertem Schirm in die Kabelklemme eingelegt und mit ihrer Signalleitung an die Klemme 11 angeschlossen.

## Patentansprüche

1. Kabelklemme, insbesondere für geschirmte Kabel, mit einem im wesentlichen U-förmigen Basisteil (1, 2, 3) zur Aufnahme zumindest eines Kabels (8 ... 10) zwischen den Schenkeln (2, 3) des Basisteils, **dadurch gekennzeichnet**, daß die Schenkelenden einen Verschluß zur Lagesicherung des Kabels bilden, der zum Einlegen oder zur Entnahme des Kabels geöffnet werden kann, und daß zumindest eine Feder (5, 6) in den Innenraum zwischen den Schenkeln (2, 3) zum Kontaktieren eines eingelegten Kabels (8 ... 10) hineinragt.

2. Kabelklemme nach Anspruch 1, **dadurch gekennzeichnet**, daß eine vom Basisteil wegführende Leitung (7) zum Anschluß an eine Federzug- oder Schraubklemme (11, 12) vorhanden ist.

3. Kabelklemme nach Anspruch 2, **dadurch gekennzeichnet**, daß die Leitung als Blechlasche (7) ausgeführt ist.

4. Kabelklemme nach einem der vorhergehenden Ansprüche, **dadurch gekennzeichnet**, daß die Schenkelenden als Verschluß eine Verengung (4) mit einem Trichter zum leichteren Einlegen und einem Trichter zur leichteren Entnahme des Kabels (8 ... 10) bilden, die bei der Kabeldurchführung entgegen einer Federkraft des Basisteils erweitert wird.

5. Kabelklemme nach einem der vorhergehenden Ansprüche, **gekennzeichnet durch** zwei in den Innenraum ragende Federn (5, 6).

6. Kabelklemme nach Anspruch 5, **dadurch gekennzeichnet**, daß die beiden Federn (5, 6) als Laschen ausgebildet sind, wobei die eine (6) an dem dem Joch (1) benachbarten Fuß des einen Schenkels (2) befestigt ist, im unbelasteten Zustand von diesem zunächst in Richtung zum diametral gegenüberliegenden Ende des anderen Schenkels (3) verläuft und im Bereich der Schenkelenden wieder zum einen Schenkel (2) hin gebogen ist, so daß ein durch den Verschluß eingelegtes Kabel zwischen der Feder (6) und der Innenseite des anderen Schenkels (3) geführt wird, und wobei die andere Feder (5) im Bereich des Endes des anderen Schenkels (3) befestigt und im unbelasteten Zustand zum diametral gegenüberliegenden Fuß des einen Schenkels (2) hin verläuft.

7. Kabelklemme nach einem der vorhergehenden Ansprüche, **dadurch gekennzeichnet**, daß sie einteilig ausgeführt und aus einem Blech gebogen ist.
